# EUROPEAN PATENT SPECIFICATION

(11) **EP 2 616 332 B1**
(45) Date of publication and mention of the grant of the patent: **07.05.2014**
(21) Application number: 10859373.2
(22) Date of filing: 04.11.2010
(51) Int. Cl.: B64C 13/30, B64C 27/00, B64C 27/72, B64C 27/615

(54) **APPARATUS FOR ACTIVELY MANIPULATING AERODYNAMIC SURFACES**
VORRICHTUNG ZUR AKTIVEN MANIPULATION AERODYNAMISCHER OBERFLÄCHEN
APPAREIL POUR LA MANIPULATION ACTIVE DE SURFACES AÉRODYNAMIQUES

(30) Priority: 01.11.2010 WO PCT/US2010/054910
(43) Date of publication of application: 24.07.2013
(73) Proprietor: Bell Helicopter Textron Inc., Fort Worth, TX 76101 (US)
(72) Inventor: SCHANK, Troy, C., Keller, TX 76248 (US); KINTZINGER, Peter, H., Grapevine, TX 76051 (US); SHERRILL, Paul, B., Grapevine, TX 76051 (US); PARHAM, Thomas, C., Colleyville, TX 76034 (US); POPELKA, David, A., Colleyville, TX 76034 (US)
(74) Representative: Lawrence, John
(86) International application number: PCT/US2010/055367
(87) International publication number: WO 2012/060836

(56) References cited:
- US-A- 3 395 878
- US-A1- 2008 035 788
- US-A1- 2008 035 798
- US-A1- 2008 202 263
- US-B1- 6 273 681
- US-B1- 6 499 690
- US-B1- 6 499 690

## Description

### Technical Field

This disclosure relates in general to the field of heavier-than-air aircraft, and more particularly to an apparatus for actively manipulating aerodynamic surfaces.

### Description of the Prior Art

Emerging and future generations of rotary-wing and tilt-rotor aircraft have active elements on the blade or wing, such as trailing edge flaps and leading edge droops, which can provide a number of enhancements over passive designs. For example, active elements can be used for vibration reduction, noise reduction, and performance improvements. Actuator systems are needed to operate active elements, but actuator systems also add weight and complexity to the aircraft. Accordingly, the design of powerful, light-weight actuator systems presents significant challenges to engineers and manufacturers.

Examples of prior art systems include US 6499690 which discloses how piezoelectric actuators may be arranged spanwise to drive a swing arm in a swinging fashion. This is to provide quieter high speed driving of flaps.

### Brief Description of the Drawings

The features believed characteristic and novel of an apparatus (collectively, a system) for active manipulation of aerodynamic surfaces are set forth in the appended claims. However, the system, as well as a preferred mode of use, and further objectives and advantages thereof, will best be understood by reference to the following detailed description when read in conjunction with the accompanying drawings, wherein:
Figure 1 is a perspective view of an example embodiment of a helicopter according to the present specification;
Figure 2 is a partial top view of an example embodiment of a helicopter having an active blade element and actuator system according to the present specification;
Figure 3 is a simple top-view schematic of an example embodiment of an actuator system according to the present specification having a span-wise orientation and a parallel configuration of linear actuators in a rotor blade;
Figure 4 is a simple side-view schematic of an example embodiment of an actuator system according to the present specification having a span-wise orientation and a parallel configuration of linear actuators in a rotor blade;
Figure 5 is a cut-away view of an example embodiment of a linear motor actuator according to the present specification;
Figure 6 is a simple top-view schematic of another example embodiment of an actuator system according to the present specification having a span-wise orientation and a serial configuration of linear actuators in a rotor blade;
Figure 7 is a simple schematic of an example embodiment of an actuator system having a cross-axis flexure pivot element and parallel actuators, according to the present specification;
Figure 8 is a simple schematic of an example embodiment of an actuator system having a cross-axis flexure pivot element and serial actuators, according to the present specification;
Figure 9 is a perspective view of an example embodiment of an assembled actuator system having a cross-axis flexure pivot element and parallel actuators, according to the present specification;
Figure 10 is a perspective view of an example embodiment of an assembled actuator system having a cross-axis flexure pivot element and serial actuators, according to the present specification;
Figure 11 is a top view of an example embodiment of an assembled actuator system having a cross-axis flexure pivot element and parallel actuators, according to the present specification;
Figure 12 is an exploded top view of an example embodiment of an assembled actuator system having a cross-axis flexure pivot element and parallel actuators, according to the present specification; and
Figure 13 is an exploded bottom view of the example embodiment in Figure 12.

While the system and apparatus for active manipulation of aerodynamic forces is susceptible to various modifications and alternative forms, the novel features thereof are shown and described below through specific example embodiments. It should be understood, however, that the description herein of specific example embodiments is not intended to limit the system or apparatus to the particular forms disclosed, but on the contrary, the intention is to cover all modifications, equivalents, and alternatives falling within the scope of the appended claims.

### Description of the Preferred Embodiment

Illustrative embodiments of the novel system are described below. In the interest of clarity, not all features of such embodiments may be described. It should be appreciated that in the development of any such system, numerous implementation-specific decisions must be made to achieve specific goals, such as compliance with system-related and business-related constraints, which will vary from one implementation to another. Moreover, it should be appreciated that such decisions might be complex and time-consuming, but would nevertheless be a routine undertaking for those of ordinary skill in the art having the benefit of this disclosure.

Reference may be made to the spatial relationships between various components and to the spatial orientation of various aspects of components as the system is depicted in the attached drawings. However, as should be recognized by those skilled in the art, the elements, members, components, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the example embodiments described herein may be oriented in any desired direction.

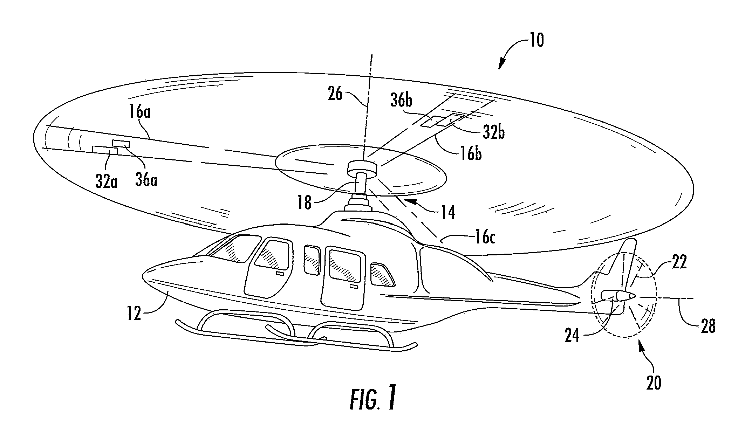

Referring to the appended drawings, Figure 1 is a perspective view of an example embodiment of a helicopter 10 according to the present specification. In general, helicopter 10 has a fuselage 12 and a main rotor assembly 14, which includes main rotor blades 16a-c and a main rotor shaft 18. Helicopter 10 may also include a tail rotor assembly 20, which generally includes tail rotor blades 22 and a tail rotor shaft 24. Main rotor blades 16a-c may rotate about a longitudinal axis 26 of main rotor shaft 18. Tail rotor blades may rotate about a longitudinal axis 28 of tail rotor shaft 24. Also illustrated in Figure 1 are flaps 32a-b and actuator systems 36a-b on main rotor blades 16a-b, respectively. Not visible in Figure 1 are flap 32c and actuator system 36c on main rotor blade 16c.

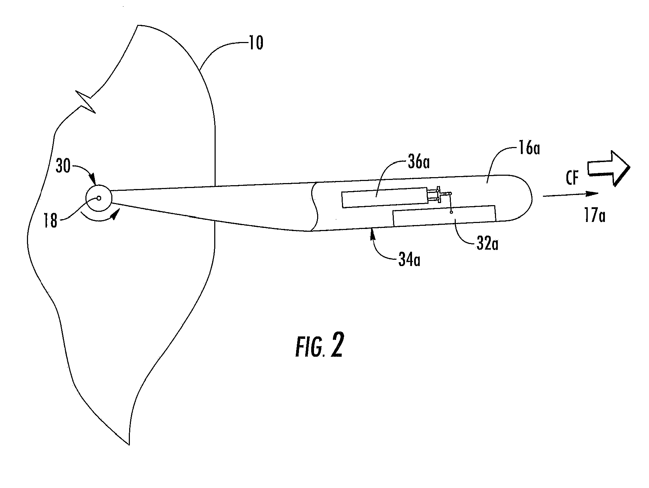

Figure 2 is a partial top view of helicopter 10, including main rotor blade 16a, connected to a hub 30 on main rotor shaft 18. In the example embodiment of helicopter 10, main rotor blade 16a may include additional active elements that may be used to manipulate aerodynamic surfaces, such as flap 32a. Flap 32a in the example embodiment of helicopter 10 is placed outboard along the trailing edge 34a, but may be placed in other positions according to particular design criteria. And while flap 32a is illustrated and described herein as a distinct component of main rotor blade 16a, it may also be any movable or flexible portion of main rotor blade 16a. An example embodiment of actuator system 36a is also depicted in the cut-away section Figure 2, generally oriented parallel to a span-wise axis 17a of main rotor blade 16a. During operation, main rotor blade 16a may rotate about hub 30, while actuator system manipulates flap 32a. The rotation causes a number of reactive forces, including lift and centrifugal forces (CF).

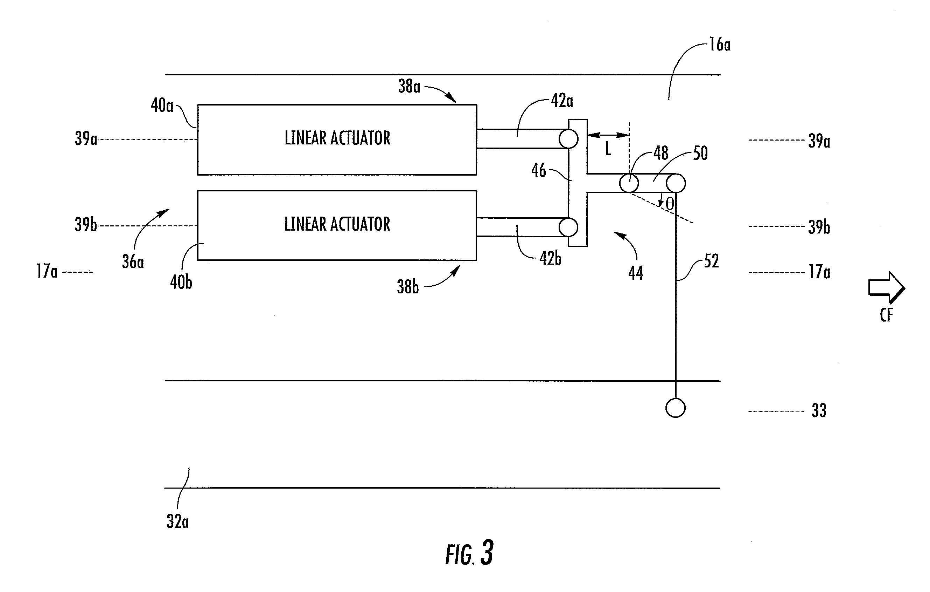

Figure 3 is a simple top-view schematic of actuator system 36a in main rotor blade 16a. Actuator system 36a may include linear actuators 38a-b. Each linear actuator 38a-b typically includes a fixed or stationary element, such as stators 40a-b, and a moving or sliding element, such as sliders 42a-b. Stators 40a-b in the example embodiment are rigidly connected to the frame of main rotor blade 16a, and they may be identical elements or may have distinct properties for certain applications. Likewise, sliders 42a-b may be identical or have distinct properties for certain applications. Linear actuators 38a-b each has an elongated shape with a lengthwise axis 39a-b that is generally oriented parallel with span-wise axis 17a of main rotor blade 16a. In the example embodiment of Figure 3, linear actuators 38a-b are also generally oriented parallel to each other along the span of main rotor blade 16a. Such a span-wise orientation is generally preferable to other orientations as it generally provides larger space in the blade for larger, more powerful motors with longer strokes, and better mass placement.

In actuator system 36a, a crank 44 is connected to sliders 42a-b. Crank 44 includes a beam element 46, a pivot element 48, and an arm element 50. Examples of pivot element 48 include a conventional bearing with rolling elements, an elastomeric element, a sleeve bushing, or a structural flexure. Pivot element 48 may be positioned coincident with beam element 46, or may be offset a distance L relative to beam element 46, as shown in Figure 3. By adjusting distance L, the large centrifugal force acting on sliders 42a-b may be used advantageously to create a negative stiffness spring effect, wherein the negative spring constant, k, is proportional to the centrifugal force CF, distance L, and angular displacement θ (-k = CF*L*sin(θ)/θ). The negative spring effect may counteract aerodynamic forces and reduce actuator power requirements, thereby also potentially reducing the mass of actuator system 36a. Arm element 50 may be rigidly attached to beam element 46, or beam element 46 and arm element may 50 be fabricated as a single element.

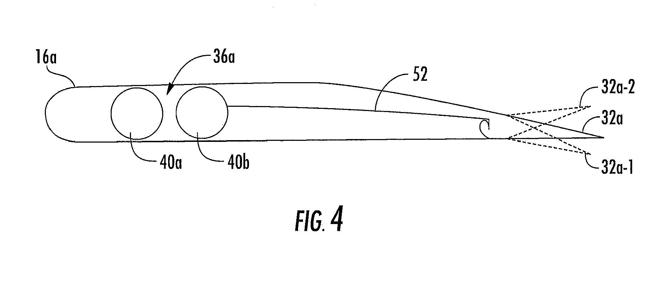

Figure 4 is a simple side-view schematic of actuator system 36a. Stators 40a-b are preferably placed within the frame of main rotor blade 16a in parallel. Connecting rod 52 connects actuator system 36a to flap 32a through crank 44 (see Figure 3) and sliders 42a-b (see Figure 3). Flap 32a may rotate about an axis 33 in response to force from connecting rod 52. Alternate positions of flap 32a as it rotates about axis 33 are illustrated in phantom as flaps 32a-1 and 32a-2.

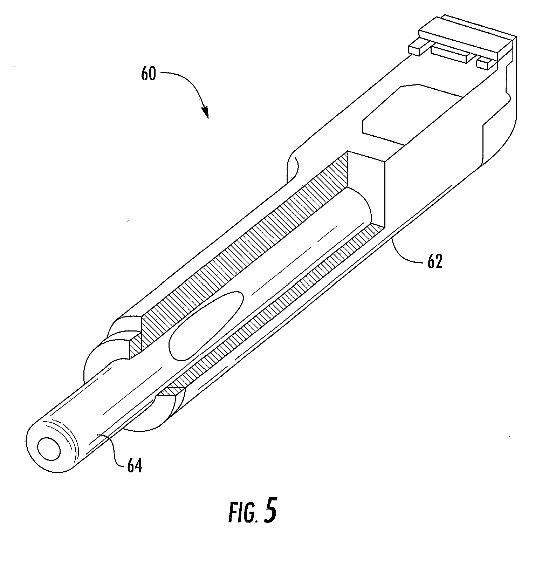

Figure 5 is a cut-away view of an example embodiment of a linear actuator 60. In this embodiment, linear actuator 60 is an electromagnetic linear motor having a fixed element, stator 62, having electric coils, and an elongated, high-power permanent magnetic slider 64. The slider 64 moves and converts electrical power to useful work. The motion, position, and retention of slider 64 are controlled with electromagnetic force generated with the electric coils of stator 62. Such an actuator may provide benefits in certain applications where high bandwidth and large stroke with a small footprint are desirable. For example, an electromagnetic motor such as linear actuator 60 may be advantageous in a helicopter rotor blade where vibrations and noise are counteracted with relatively small flap deflections at high frequency, but performance is enhanced with larger deflections at a lower frequency.

During rotation of main rotor blade 16a, the centrifugal forces are carried across beam element 46 and reacted by pivot 48, effectively canceling the tendency of sliders 42a-b to sling outward because of the centrifugal forces. Crank 44 is similar to a common bell crank, and as it rotates it converts the span-wise motion of sliders 42a-b into chord-wise motion that may be used to manipulate an active element, such as flap 32a, which is connected to arm element 50 through a connecting rod 52 or similar linkage.

In operation, sliders 42a-b are actuated such that each reciprocates generally parallel to axis 17a and slider 42a moves opposite to slider 42b. Thus, as slider 42a moves in the outboard direction of main rotor blade 16a, slider 42b moves inboard. And as slider 42a moves outboard and slider 42b moves inboard, crank 44 rotates about pivot element 48, causing arm element 50 to advance toward trailing edge 34a of main rotor blade 16a. The movement of arm element 50 toward trailing edge 34a in turn causes connecting rod 52 to act on flap 32a, which may rotate about axis 33 to position 32a-1.

Conversely, as slider 42a moves inboard and slider 42b moves outboard, crank 44 rotates in the opposite direction about pivot element 48, causing arm element 50 to retreat from trailing edge 34a. The movement of arm element 50 away from trailing edge 34b in turn causes connecting rod 52 to act on flap 32a, which may rotate about axis 33 to another position, such as 32a-2.

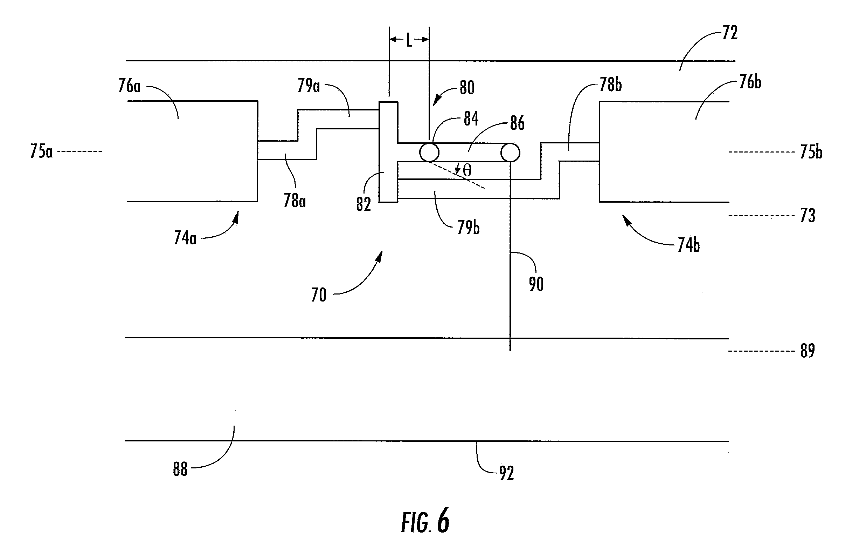

Figure 6 is a simple top-view schematic of another example embodiment of an actuator system 70 in a main rotor blade 72 according to the present specification. Actuator system 70 may include linear actuators 74a-b. Each linear actuator 74a-b typically includes a fixed or stationary element, such as stators 76a-b, and a moving element or sliding element, such as sliders 78a-b. Stators 76a-b in the example embodiment are rigidly connected to the frame of main rotor blade 72, and they may be identical elements or may have distinct properties for certain applications. Likewise, sliders 78a-b may be identical or have distinct properties for certain applications. Linear actuators 74a-b each has an elongated shape with a lengthwise axis 75a-b that is generally oriented parallel with span-wise axis 73 of main rotor blade 72. In contrast to linear actuators 38a-b in Figure 3, linear actuators 74a-b are generally oriented in series along the span of main rotor blade 72.

In actuator system 70, a crank 80 is connected to sliders 78a-b. Crank 80 includes a beam element 82, a pivot element 84, and an arm element 86. Extension elements 79a-b may be used to connect sliders 78a-b to beam element 82. Examples of pivot element 84 include a conventional bearing with rolling elements, an elastomeric element, a sleeve bushing, or a structural flexure. Pivot element 84 may be positioned coincident with beam element 82, or may be positioned a distance L relative to beam element 82, as shown in Figure 6. By adjusting distance L, the large centrifugal force acting on sliders 78a-b may be used advantageously to create a negative stiffness spring effect, wherein the negative spring constant, k, is proportional to the centrifugal force CF, distance L, and angular displacement θ (-k = CF*L*sin(θ)/θ). The negative spring effect may counteract aerodynamic forces and reduce actuator power requirements, thereby also potentially reducing the mass of actuator system 70. Arm element 86 may be rigidly attached to beam element 82, or beam element 82 and arm element 86 may be fabricated as a single element.

During rotation of main rotor blade 72, the centrifugal forces are carried across beam element 82 and reacted by pivot element 84, effectively canceling the tendency of sliders 78a-b to sling outward because of the centrifugal forces. Crank 80 is similar to a common bell crank, and as it rotates it converts the span-wise motion of sliders 78a-b into chord-wise motion that may be used to manipulate an active element, such as flap 88, which is connected to arm element 86 through a connecting rod 90 or similar linkage.

In operation, sliders 78a-b are actuated such that each reciprocates generally parallel to axis 73 and slider 78a moves opposite to slider 78b. Thus, as slider 78a moves in the outboard direction of main rotor blade 72, slider 78b moves inboard. And as slider 78a moves outboard and slider 78b moves inboard, crank 80 rotates about pivot element 84, causing arm element 86 to advance toward trailing edge 92 of main rotor blade 72. The movement of arm element 86 toward trailing edge 92 in turn causes connecting rod 90 to act on flap 88, which may rotate about axis 89.

Conversely, as slider 78a moves inboard and slider 78b moves outboard, crank 80 rotates in the opposite direction about pivot element 84, causing arm element 86 to retreat from trailing edge 92. The movement of arm element 86 away from trailing edge 92 in turn causes connecting rod 90 to act on flap 88, which may rotate about axis 89.

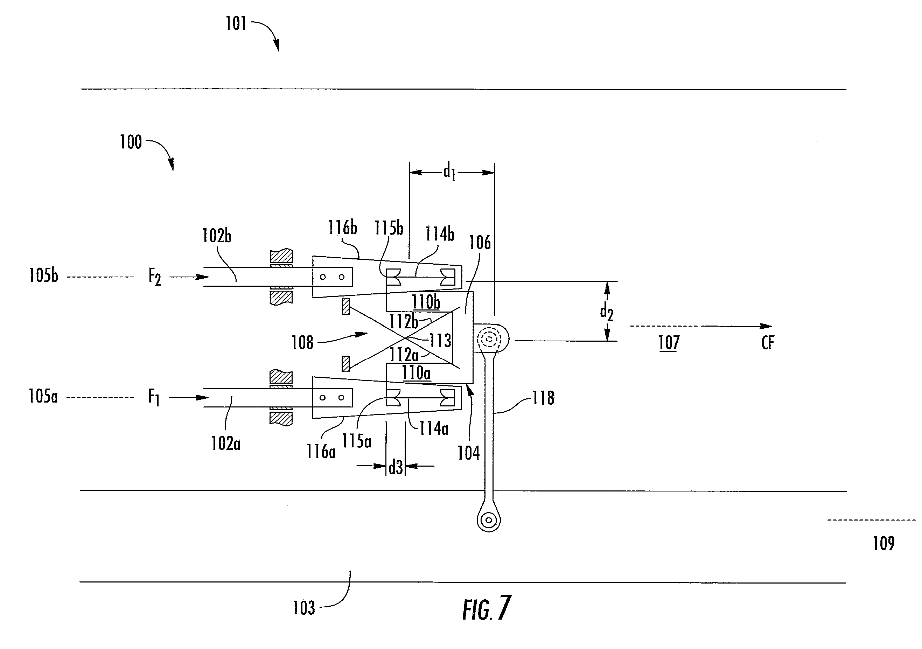

Figure 7 is a simple schematic of an example embodiment of an actuator system 100 having a cross-axis flexure pivot element, which may be deployed in a main rotor blade 101 or other wing structure having an active element 103. A cross-axis flexure pivot element may simulate a pinned joint while providing certain potential advantages over alternative elements, such as reducing weight and moving parts. A cross-axis flexure pivot element may also be advantageous where high frequency motion and low hysteresis is needed. Actuator system 100 may include moving or sliding elements, such as sliding elements 102a-b, which may be driven by input forces F1 and F2, respectively. Sliding elements 102a-b may be identical or have distinct properties for certain applications. Sliding elements 102a-b each has an elongated shape with a lengthwise axis 105a-b that may be oriented parallel with a span-wise axis 107 of main rotor blade 101. In the example embodiment of Figure 7, sliding elements 102a-b are also generally oriented parallel to each other along the span of main rotor blade 101.

In actuator system 100, a crank 104 may be connected to sliding elements 102a-b. Crank 104 includes a beam element 106, a cross-axis flexure pivot element 108, and arm elements 110a-b. Cross-axis flexure pivot element 108 may include flexure straps 112a-b, which may be made of fiberglass or other suitable flexure material. Each flexure strap 112a-b can be fastened on one end to crank 104, and on the other end to the frame of main rotor blade 101 or other fixture that may be rigidly attached to the frame. The flexure straps 112a-b intersect at a pivot point 113. Arm elements 110a-b may each be fastened to flexure straps 114a-b, respectively, which may in turn be fastened to sleeve elements 116a-b. The use of flexure straps 114a-b for connecting crank 104 to sleeve elements 116a-b allows transverse displacement between crank 104 and sliding elements 102a-b. Each sleeve element 116a-b may be fastened to a sliding element 102a-b, respectively. The length of flexure straps 114a-b may be adjusted to control the offset d3 between pivot point 113 and the points of attachment 115a-b with arm elements 110a-b. The offset d3 may be used advantageously to create a negative stiffness spring effect as discussed above. The negative spring effect may counteract aerodynamic forces and reduce actuator power requirements, thereby also potentially reducing the mass of actuator system 100. Arm elements 110a-b may be rigidly attached to beam element 106, or beam element 106 and arm elements 110a-b may be fabricated as a single element. A link element 118 may be fastened on one end to crank 104 and on the other to active element 103.

In operation, sliding elements 102a-b may be actuated such that each reciprocates generally parallel to a span-wise axis of a wing structure and sliding element 102a moves opposite to sliding element 102b. Thus, as sliding element 102a moves in the outboard direction of a main rotor blade, sliding element 102b moves inboard. And as sliding element 102a moves outboard and sliding element 102b moves inboard, crank 104 may rotate about pivot point 113, causing beam element 106 to translate in a first direction (e.g., away from a trailing edge). The movement of beam element 106 in turn may cause link element 118 to act on active element 103, which may rotate about an axis 109.

Conversely, as sliding element 102a moves inboard and sliding element 102b moves outboard, crank 104 may rotate in the opposite direction about pivot point 113, causing beam element 106 to translate in a second direction (e.g., toward a trailing edge). The movement of beam element 106 in turn may cause link element 118 to act on active element 103, which may rotate about axis 109.

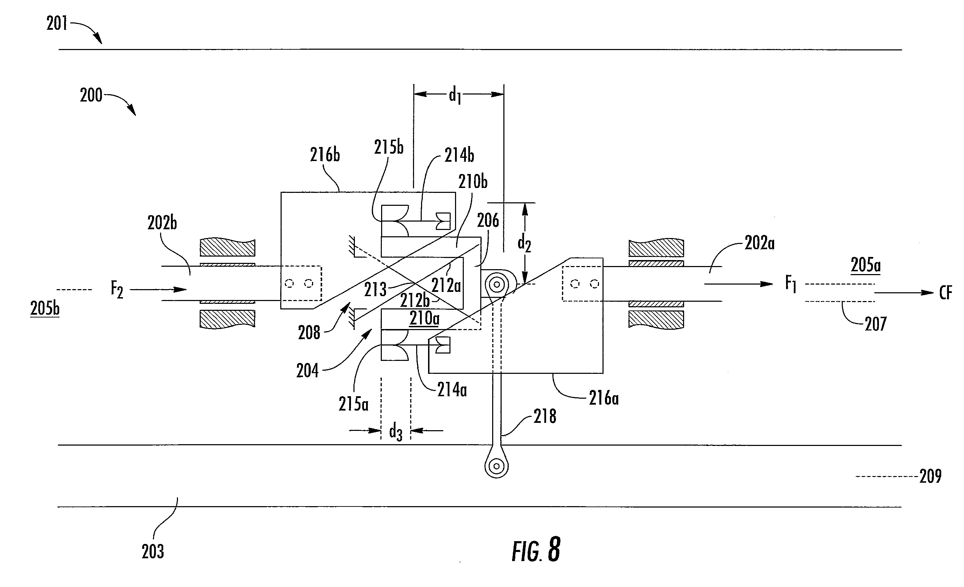

Figure 8 is a simple schematic of an example embodiment of an actuator system 200 having a cross-axis flexure pivot element, which may be deployed in a main rotor blade 201 or other wing structure having an active element 203. Actuator system 200 may include moving or sliding elements, such as sliding elements 202a-b, which may be driven by input forces F1 and F2, respectively. Sliding elements 202a-b may be identical or have distinct properties for certain applications. Sliding elements 202a-b each has an elongated shape with a lengthwise axis 205a-b that may be oriented parallel with a span-wise axis 207 of main rotor blade 201. In the example embodiment of Figure 8, sliding elements 202a-b are also generally oriented in series with each other along the span of main rotor blade 201.

In actuator system 200, a crank 204 may be connected to sliding elements 202a-b. Crank 204 includes a beam element 206, a cross-axis flexure pivot element 208, and arm elements 210a-b. Cross-axis flexure pivot element 208 may include flexure straps 212a-b, which may be made of fiberglass or other suitable flexure material. Each flexure strap 212a-b may be fastened on one end to crank 204, and on the other end to the frame of main rotor blade 201 or other fixture that may be rigidly attached to the frame. The flexure straps 212a-b intersect at a pivot point 213. Arm elements 210a-b may be each fastened to flexure straps 214a-b, respectively, which may be in turn fastened to sleeve elements 216a-b. The use of flexure straps 214a-b for connecting crank 204 to sleeve elements 216a-b allows transverse displacement between crank 204 and sliding elements 202a-b. Each sleeve element 216a-b may be fastened to a sliding element 202a-b, respectively. The length of flexure straps 214a-b may be adjusted to control the offset d3 between pivot point 213 and the points of attachment 215a-b with arm elements 210a-b. The offset d3 may be used advantageously to create a negative stiffness spring effect as discussed above. The negative spring effect may counteract aerodynamic forces and reduce actuator power requirements, thereby also potentially reducing the mass of actuator system 200. Arm elements 210a-b may be rigidly attached to beam element 206, or beam element 206 and arm elements 210a-b may be fabricated as a single element. A link element 218 may be fastened on one end to crank 204 and on the other to active element 203.

In operation, sliding elements 202a-b may be actuated such that each reciprocates generally parallel to a span-wise axis of a wing structure and sliding element 202a moves opposite to sliding element 202b. Thus, as sliding element 202a moves in the outboard direction of a main rotor blade, sliding element 202b moves inboard. And as sliding element 202a moves outboard and sliding element 202b moves inboard, crank 204 may rotate about pivot point 213, causing beam element 206 to translate in a first direction (e.g., away from a trailing edge). The movement of beam element 206 in turn may cause link element 218 to act on active element 203, which may rotate about an axis 209.

Conversely, as sliding element 202a moves inboard and sliding element 202b moves outboard, crank 204 rotates in the opposite direction about pivot point 213, causing beam element 206 to translate in a second direction (e.g., toward a trailing edge). The movement of beam element 206 in turn causes link element 218 to act on active element 203, which may rotate about axis 209.

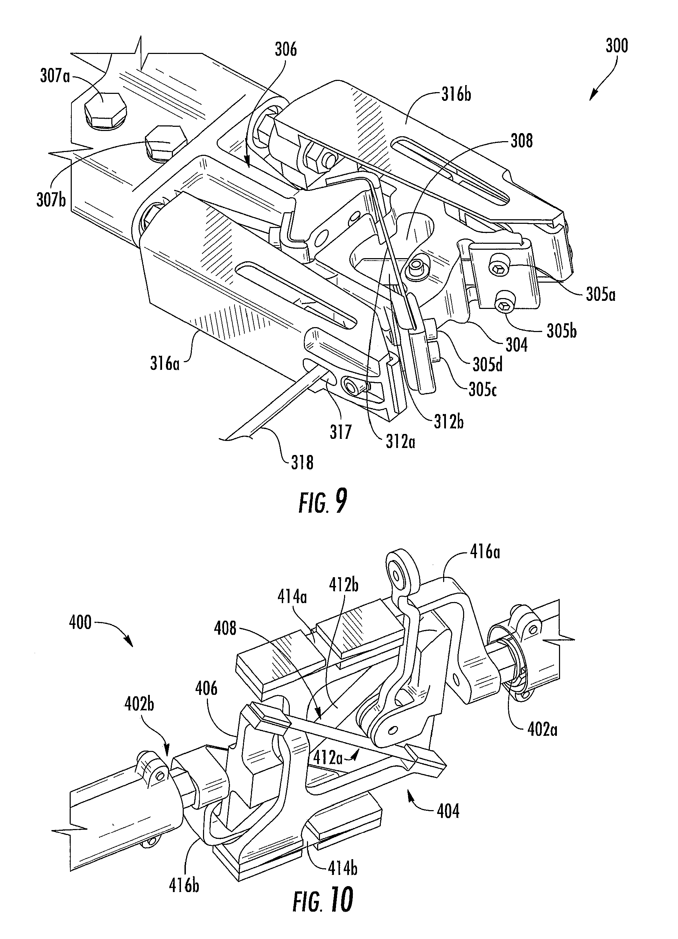

Figure 9 is a perspective view of an example embodiment of an assembled actuator system 300 according to the present specification. Actuator system 300 is representative of a system having a parallel configuration of linear actuators, similar to the system illustrated in Figure 3 or Figure 7. As shown, actuator system 300 includes a crank 304, a base 306, and a pivot element 308. Pivot element 308 generally includes flexure straps 312a-b, which may be fastened or clamped on one end to crank 304 with fasteners 305a-d and on the other to base 306. Base 306 may be fastened to a wing frame (not shown) with bolts 307a-b. Each sleeve element 316a-b may be fastened near one end to a sliding element (not visible) and near the other end to another flexure strap (not visible). Similar to flexure straps 114a-b in Figure 7, these flexure straps may be fastened on the other end to crank 304. Sleeve element 316a may further include a hole 317 to permit passage of a link element 318 from crank 304 to an active element (not shown).

Figure 10 is a perspective view of another example embodiment of an assembled actuator system 400 according to the present specification. Actuator system 400 is representative of a system having a serial configuration of linear actuators, similar to the system illustrated in Figure 6 or Figure 8. As shown, actuator system 400 includes a crank 404, a base 406, and a pivot element 408. Pivot element 408 generally includes flexure straps 412a-b, which may be fastened or clamped on one end to crank 404 and on the other to base 406. Each sleeve element 416a-b may be fastened near one end to a sliding element 402a-b, respectively, and near the other end to another flexure strap 414a-b, respectively. Similar to flexure straps 214a-b in Figure 8, these flexure straps may be fastened on the other end to crank 404.

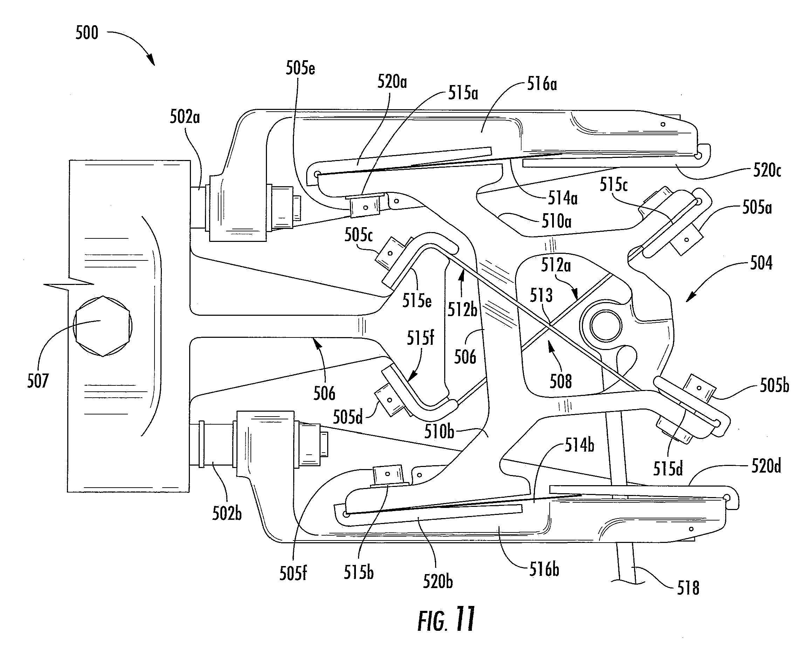

Figure 11 is a top view of an example embodiment of an actuator system 500, according to the present specification. Actuator system 500 is representative of a system having a parallel configuration of linear actuators, similar to the system illustrated in Figure 9. As shown, actuator system 500 includes a crank 504, a base 506, and a pivot element 508. Crank 504 is configured with multiple attachment points 515a-d, and may include a beam element 506 and arm elements 510a-b. Pivot element 508 generally includes flexure straps 512a-b, which may be fastened or clamped at attachment points 515c-d to crank 504 with fasteners 505a-b and at attachment points 515e-f to base 506 with fasteners 505c-d. Flexure straps 512a-b intersect at a pivot point 513, and the length of flexure straps 512a-b may be adjusted to control the offset between pivot point 513 and attachment points 515e-f. The offset may be used advantageously to create a negative stiffness spring effect as discussed above. Base 506 may be fastened to a wing frame (not shown) with bolts, such as bolt 507. Each sleeve element 516a-b is fastened near one end to a sliding element 502a-b, respectively, and near the other end to flexure straps 514a-b, respectively. Flexure straps 514a-b may also be fastened to crank 504 with fasteners 505e-f at attachment points 515a-b, respectively. Shoe elements 520a-d may be used to control curvature and bending strain. Sleeve element 516b may further include a hole (not visible) to permit passage of a link element 518 from crank 504 to an active element (not shown).

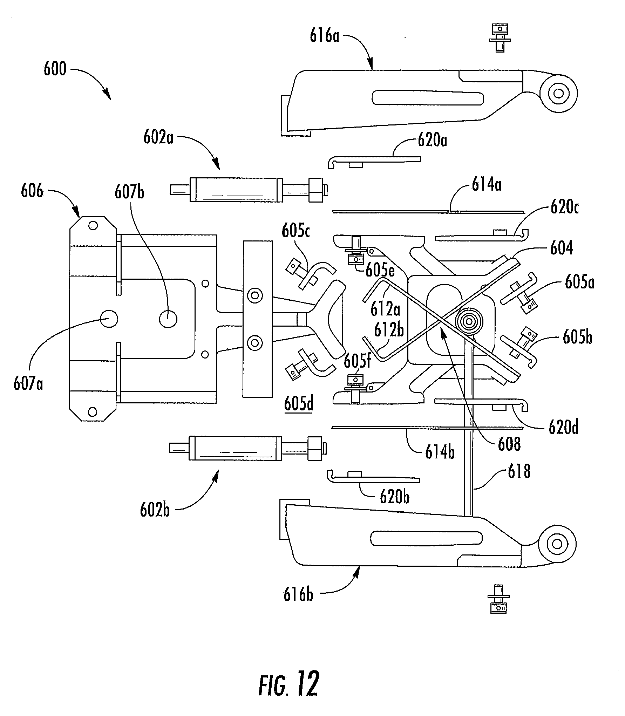

Figure 12 is an exploded top view of an actuator system 600, according to the present specification. Actuator system 600 is also representative of a system having a parallel configuration of linear actuators. As shown, actuator system 600 includes linear actuators 602a-b, a crank 604, a base 606, and a pivot element 608. Pivot element 608 generally includes flexure straps 612a-b, which may be fastened or clamped on one end to crank 604 with fasteners 605a-b and on the other to base 606 with fasteners 605c-d. Base 606 may be fastened to a wing frame (not shown) by inserting bolts (not shown) through holes 607a-b. Each sleeve element 616a-b may be fastened near one end to a sliding element 602a-b, respectively, and near the other end to flexure straps 614a-b, respectively. Flexure straps 614a-b may also be fastened to crank 604 with fasteners 605e-f. Shoe elements 620a-d may be used to control curvature and bending strain. Sleeve element 616b may further include a hole (not visible) to permit passage of a link element 618 from crank 604 to an active element (not shown).

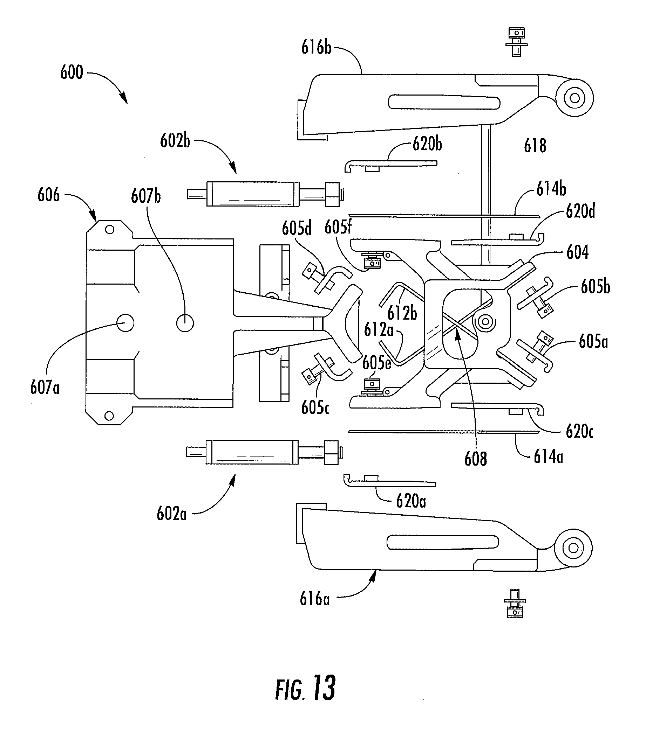

Figure 13 is an exploded bottom view of actuator system 600.

Alternatively or additionally, an actuator system may include hydraulic, piezoelectric, or electromechanical components. For example, a linear actuator may have a fixed element such as a hydraulic cylinder and a moving element such as a hydraulic ram.

The system and apparatus described herein provides significant advantages, including: (1) reducing or eliminating the adverse effects of centrifugal forces on linear actuators in a span-wise orientation; (2) more powerful motors; (3) longer stroke and greater bandwidth than other systems; and (4) improved mass distribution characteristics.

Certain example embodiments have been shown in the drawings and described above, but variations in these embodiments will be apparent to those skilled in the art. The principles disclosed herein are readily applicable to a variety of aircraft, including many types of rotary wing, tilt-rotor, and fixed wing aircraft, as well as a variety of other active wing elements, including leading edge droops.

## Claims

1. An apparatus (100; 200; 300; 400; 500; 600) for actuating a moveable member on a wing member (101; 201), comprising:
a base (306; 406; 506);
a first linear actuator (38a; 60; 74a; 602a) having a first fixed element (62) and a first sliding element (42a; 78; 102a; 202a; 402; 602a) movable within the base;
a second linear actuator (38b; 60; 74b; 602b) having a second fixed element and a second sliding element (42b; 78b; 102b; 202b; 402b; 602b) movable within the base;
a crank element (44; 80; 104; 204; 304; 404; 504; 604) coupled to a link element (118; 218; 318; 418; 518; 618) at a link attachment location, the link element extending approximately chordwise, the link element being operably associable with the moveable member;
a first sleeve element (116a; 216a; 316a; 416a; 516a; 616a) connected to the first sliding element and to the crank element;
a second sleeve element (116b; 216b; 316b; 416b; 516b; 616b) connected to the second sliding element and to the crank element; **characterized in that** the apparatus further comprises:
a cross-axis flexure pivot element 108; 208; 308; 408; 508; 608) comprising:
a first flexure (112a; 212a; 312a; 412a; 512a; 612a) strap and a second flexure strap (112b; 212b; 312b; 412b; 512b; 612b) each connected to the base and to the crank element such that the first flexure strap and the second flexure strap diagonally cross each other at a pivot point (113; 213; 513), the pivot point being located at a distance from the link attachment location in approximately a span-wise direction.

2. The apparatus of claim 1, wherein the first flexure strap is connected to the base at first beam attachment point (505c; 605e) and the second flexure strap is connected to the base at a second beam attachment point (505d; 605f).

3. An aircraft (10), comprising:
a fuselage (12);
a wing (16) having a span-wise axis, a frame connected to the fuselage, and an active element (32a; 88; 103; 203);
an apparatus according to claim 1 or claim 2, wherein the base is connected to the frame; and
the link element is connected on a first end to the crank element and on a second end to the active element.

4. The aircraft of claim 3, wherein the first sliding element and the second sliding element are aligned to be movable along an axis parallel to the span-wise axis of the wing.

5. The aircraft of claim 3 or of claim 4, wherein the wing is rotatable about a hub (30) connected to the fuselage.

6. The aircraft of claim 3 or of claim 4, wherein the wing is rotatable about a hub (30) connected to the fuselage and the first sliding element and the second sliding element are aligned to be movable along an axis parallel to the span-wise axis of the wing.

7. The aircraft of any one of claims 3 to 6, wherein the first linear actuator and the second linear actuator are electromagnetic motors (60); or
the apparatus of claim 1 or of claim 2, wherein the first linear actuator and the second linear actuator are electromagnetic actuators (60).

8. The aircraft or apparatus of any preceding claim, wherein the first linear actuator is aligned parallel to the second linear actuator.

9. The aircraft or apparatus of any of claims 1 to 8, wherein the first linear actuator is aligned in series with the second linear actuator.

10. The aircraft of claim 3 or of any preceding claim, wherein:
the wing is rotatable about a hub (30) connected to the fuselage;
the first sliding element and the second sliding element are aligned to be movable along an axis parallel to the span-wise axis of the wing; and
the first linear actuator is aligned parallel to the second linear actuator.

11. The aircraft of claim 10, wherein:
the cross flexure pivot element comprises an offset pivot point (d3).

12. The aircraft of claim 3 or of any preceding claim, wherein:
the wing is rotatable about a hub (30) connected to the fuselage;
the first sliding element and the second sliding element are aligned to be movable along an axis parallel to the span-wise axis of the wing;
the first linear actuator is aligned in series with the second linear actuator; and
the cross-axis flexure pivot element comprises an offset pivot point (d3).

## Patentansprüche

1. Eine Vorrichtung (100; 200; 300; 400; 500; 600) zum Betätigen eines beweglichen Elements an einem Flügel (101; 201) bestehend aus Folgenden:
einem Unterbau (306; 406; 506);
einem ersten linearen Stellglied (38a; 60; 74a; 602a) mit einem ersten festen Element (62) und einem ersten Gleitelement (42a; 78; 102a; 202a; 402a; 602a), das innerhalb des Unterbaus bewegt werden kann;
einem zweiten linearen Stellglied(38b; 60; 74b; 602b) mit einem zweiten festen Element (40b) und einem zweiten Gleitelement (42b; 78b; 102b; 202b; 402b; 602b), das innerhalb des Unterbaus bewegt werden kann;
einem Kurbelelement (44; 80; 104; 204; 304; 404; 504; 604), das mit einem Verbindungselement (118; 218; 318; 418; 518; 618) an einer Verbindungsstelle verbunden ist, wobei das Verbindungselement ungefähr profilartig verläuft und das Verbindungselement funktionsfähig mit dem beweglichen Element verbunden ist
einem ersten Muffenelement (116a; 216a; 316a; 416a; 516a; 616a), das mit dem ersten Gleitelement und dem Kurbelelement verbunden ist;
einem zweiten Muffenelement (116b; 216b; 316b; 416b; 516b; 616b), das mit dem zweiten Gleitelement und dem Kurbelelement verbunden ist;
einem biegsamen Drehzapfen (108; 208; 308; 408; 508; 608;) an der Querachse bestehend aus:
einem ersten Biegebügel (112a; 212a; 312a; 412a; 512a; 612a) und einem zweiten Biegebügel (112b; 212b; 312b; 412b; 512b; 612b), die jeweils mit dem Unterbau und dem Kurbelelement verbunden sind, so dass sich der erste Biegebügel und der zweite Biegebügel diagonal an einem Drehpunkt (113, 213; 513) kreuzen, wobei sich der Drehpunkt ungefähr in Spannrichtung im Abstand von der Verbindungsstelle befindet.

2. Die Vorrichtung entsprechend Anspruch 1, wobei der erste Biegebügel an einer ersten Trägerverbindungsstelle (505c; 605c) am Unterbau verbunden ist und der zweite Biegebügel an einer zweiten Trägerverbindungsstelle (505d; 605d) mit dem Unterbau verbunden ist.

3. Ein Flugzeug (10) bestehend aus:
einem Rumpf (12);
einem Flügel (16) mit einer Spannachse, einem mit dem Rumpf verbundenen Gestell und einem aktiven Element (32a; 88; 103; 203); und
einer Vorrichtung entsprechend Anspruch 1 oder Anspruch 2, wobei der Unterbau mit dem Gestell verbunden ist;
wobei das Verbindungselement mit einem ersten Ende des Kurbelelements und einem

4. Das Flugzeug entsprechend Anspruch 3, wobei das erste Gleitelement und das zweite Gleitelement so ausgerichtet sind, dass sie entlang einer zur Spannweite parallel verlaufenden Achse des Flügels bewegbar sind.

5. Das Flugzeug entsprechend Anspruch 3 oder Anspruch 4, wobei der Flügel um eine Nabe, die mit dem Rumpf verbunden ist, rotierbar ist.

6. Das Flugzeug entsprechend Anspruch 3 oder Anspruch 4, wobei der Flügel um eine Nabe, die mit dem Rumpf verbunden ist, rotierbar ist und das erste Gleitelement und das zweite Gleitelement so ausgerichtet sind, dass sie entlang einer zur Spannweite parallel verlaufenden Achse des Flügels bewegbar sind.

7. Das Flugzeug entsprechend einem der Ansprüche 3 bis 6, wobei das erste lineare Stellglied und das zweite lineare Stellglied elektromagnetische Motoren (60) sind; oder
die Vorrichtung entsprechend Anspruch 1 oder 2, wobei das erste lineare Stellglied und das zweite lineare Stellglied elektromagnetische Stellglieder (60) sind.

8. Das Flugzeug oder die Vorrichtung entsprechend einem der vorhergehenden Ansprüche, wobei das erste lineare Stellglied parallel zum zweiten linearen Stellglied ausgerichtet ist.

9. Das Flugzeug oder die Vorrichtung entsprechend einem der Ansprüche 1 bis 8, wobei das erste lineare Stellglied in Serie zum zweiten linearen Stellglied angeordnet ist.

10. Das Flugzeug entsprechend Anspruch 3 oder einem der vorhergehenden Ansprüche, wobei:
der Flügel um eine Nabe (30) rotierbar ist, die mit dem Rumpf verbunden ist;
das erste Gleitelement und das zweite Gleitelement so ausgerichtet sind, dass sie entlang einer zur Spannweite parallel verlaufenden Achse des Flügels bewegbar sind; und
das erste lineare Stellglied parallel zum zweiten linearen Stellglied ausgerichtet ist.

11. Das Flugzeug entsprechend Anspruch 10, wobei:
das querbiegsame Drehelement ein versetzter Drehpunkt (d3) ist.

12. Das Flugzeug entsprechend Anspruch 3 oder einem der vorhergehenden Ansprüche, wobei:
der Flügel um eine Nabe (30) rotierbar ist, die mit dem Rumpf verbunden ist;
das erste Gleitelement und das zweite Gleitelement so ausgerichtet sind, dass sie entlang einer zur Spannweite parallel verlaufenden Achse des Flügels bewegbar sind;
das erste lineare Stellglied in Serie zum zweiten linearen Stellglied angeordnet ist; und
das die Achse überkreuzende biegsame Drehelement ein versetzter Drehpunkt (d3) ist.

## Revendications

1. Appareil (100, 200, 300, 400, 500, 600) pour actionner un élément mobile sur un élément d'aile (101, 201), comprenant :
une base (306, 406, 506),
un premier vérin linéaire (38a, 60, 74a, 602a) ayant un premier élément fixe (62) et
un premier élément coulissant (42a, 78, 102a, 202a, 402, 602a) mobile à l'intérieur de la base,
un deuxième vérin linéaire (38b, 60, 74b, 602b) ayant un deuxième élément fixe et un deuxième élément de glissement (42b, 78b, 102b, 202b, 402b, 602b) pouvant se déplacer à l'intérieur de la base ;
un élément de manivelle (44, 80, 104, 204, 304, 404, 504, 604) couplé à un élément de bielle (118, 218, 318, 418, 518, 618) à un emplacement de fixation de bielle, l'élément de bielle s'étendant sensiblement dans le sens de la corde, l'élément de bielle étant fonctionnellement associable avec l'élément mobile,
un premier élément de corps du rivet (116a, 216a, 316a, 416a, 516a, 616a) connecté au premier élément de glissement et à l'élément de manivelle,
un deuxième élément de corps du rivet (116b, 216b, 316b, 416b, 516b, 616b) connecté au deuxième élément coulissant et à l'élément de manivelle, **caractérisé en ce que** l'appareil comprend en outre :
un élément de pivot élastique d'axe transversal (108, 208, 308, 408, 508, 608) comprenant :
une première sangle de flexion (112a, 212a, 312a, 412a, 512a, 612a) et une deuxième sangle de flexion (112b, 212b, 312b, 412b, 512b, 612b) connectées chacune à la base et à l'élément de manivelle de telle sorte que la première sangle de flexion et la deuxième sangle de flexion se traversent en diagonale l'une et l'autre à un point d'articulation (113, 213, 513), le point d'articulation étant situé à une certaine distance de l'emplacement de fixation de bielle dans une direction approximativement dans le sens de l'envergure.

2. Appareil selon la revendication 1, dans lequel la première sangle de flexion est reliée à la base au premier point de fixation de faisceau (505c, 605e) et la deuxième sangle de flexion est reliée à la base à un deuxième point de fixation de faisceau (505d, 605f).

3. Aéronef (10), comprenant :
un fuselage (12) ;
une aile (16) ayant un axe d'articulation de pas, un cadre monté sur le fuselage, et un élément actif (32a, 88, 103, 203) ;
un appareil selon la revendication 1 ou la revendication 2, dans lequel la base est reliée au cadre, et
l'élément de bielle est relié à une première extrémité de l'élément de manivelle et sur une deuxième extrémité de l'élément actif.

4. Aéronef selon la revendication 3, dans lequel le premier élément de glissement et le deuxième élément de glissement sont alignés pour être mobiles le long d'un axe parallèle à l'axe d'articulation de pas de l'aile.

5. Aéronef selon la revendication 3 ou la revendication 4, dans lequel l'aile peut tourner autour d'un moyeu (30) relié au fuselage.

6. Aéronef selon la revendication 3 ou la revendication 4, dans lequel l'aile peut tourner autour d'un moyeu (30) relié au fuselage et le premier élément de glissement et le deuxième élément de glissement sont alignés pour être mobiles le long d'un axe parallèle à l'axe d'articulation de pas de l'aile.

7. Aéronef selon l'une quelconque des revendications 3 à 6, dans lequel le premier vérin linéaire et le deuxième vérin linéaire sont des moteurs électromagnétiques (60) ; ou
appareil selon la revendication 1 ou la revendication 2, dans lequel le premier vérin linéaire et le deuxième vérin linéaire sont des vérins électromagnétiques (60).

8. Aéronef ou appareil selon l'une quelconque des revendications précédentes, dans lequel le premier vérin linéaire est aligné parallèlement au deuxième vérin linéaire.

9. Aéronef ou appareil selon l'une quelconque des revendications 1 à 8, dans lequel le premier vérin linéaire est aligné en série avec le deuxième vérin linéaire.

10. Aéronef selon la revendication 3 ou selon l'une quelconque des revendications précédentes, dans lequel :
l'aile est orientable autour d'un moyeu (30) relié au fuselage,
le premier élément de glissement et le deuxième élément de glissement sont alignés pour être mobiles le long d'un axe parallèle à l'axe d'articulation de pas de l'aile, et le premier vérin linéaire est aligné parallèlement au deuxième vérin linéaire.

11. Aéronef selon la revendication 10, dans lequel :
l'élément de pivot élastique transversal comprend un point de pivot décalé (d3).

12. Aéronef selon la revendication 3 ou selon l'une quelconque des revendications précédentes, dans lequel :
l'aile est susceptible de tourner autour d'un moyeu (30) relié au fuselage ;
le premier élément de glissement et le deuxième élément de glissement sont alignés pour être mobiles le long d'un axe parallèle à l'axe d'articulation de pas de l'aile ;
le premier vérin linéaire est aligné en série avec le deuxième vérin linéaire ; et
l'élément de pivot élastique transversal comprend un point de pivot décalé (d3).
